# EUROPÄISCHE PATENTSCHRIFT

(11) **EP 0 508 127 B1**
(45) Veröffentlichungstag und Bekanntmachung des Hinweises auf die Patenterteilung: **13.09.1995**
(21) Anmeldenummer: 92104060.6
(22) Anmeldetag: 10.03.1992
(51) Int. Cl.: G03B 21/132

(54) **Arbeitsprojektor mit einem Klapparm für den Projektionskopf**
Overhead projector with collapsible arm for the projection head
Rétroprojecteur avec bras pliant pour sa tête de projection

(30) Priorität: 11.04.1991 DE 4111818
(43) Veröffentlichungstag der Anmeldung: 14.10.1992
(73) Patentinhaber: GEHA-WERKE GmbH, D-30001 Hannover (DE)
(72) Erfinder: Strohmeyer, Willi, W-3000 Hannover 91 (DE)
(74) Vertreter: Braun, Dieter, Dipl.-Ing. Patentanwälte, Hagemann & Kehl

(56) Entgegenhaltungen:
- DE-A- 3 205 643
- GB-A- 2 186 385
- US-A- 3 117 320
- US-A- 3 579 241

## Beschreibung

Die Erfindung bezieht sich auf einen Arbeitsprojektor mit einem Klapparm für den Projektionskopf, der ein mit einer Verriegelung versehenes Gelenk aufweist und um dieses an den Gerätekörper schwenkbar ist, wobei das Gelenk an einem Gelenkkörper angeordnet ist, wie z.B. aus der DE-A-32 05 643 bekannt.

Derartige Klapparme weisen sämtlich den Nachteil auf, daß sie ein Gelenk aufweisen, das ständig seitlich bzw. oberhalb des Gerätekörpers deutlich sichtbar angebracht ist. An dem Gelenk ist zudem eine am Klapparm angeordnete Verriegelung vorgesehen, die vom Bediener vor dem Verschwenken des Klapparmes betätigt werden muß. Diese Verriegelung ist gleichfalls deutlich sichtbar am Klapparm bzw. an dessen Gelenk angeordnet. Allen bekannten Lösungen ist es gemeinsam, daß das Gelenk bzw. die Verriegelung als deutlich sichtbare Bauteile das Äußere des Arbeitsprojektors beeinträchtigen und außerdem z. B. Schüler dazu verleiten, am Arbeitsprojektor zu hantieren und diesen unter Umständen zu beschädigen. Nicht zuletzt erfordert eine derartige Gestaltung einen zusätzlichen konstruktiven Aufwand, der den Arbeitsprojektor verteuert.

Der Erfindung liegt die Aufgabe zugrunde, einen Klapparm so zu gestalten, daß in seiner Projektionsstellung das Gelenk und dessen Verriegelung unsichtbar sind, wobei gleichzeitig eine sehr einfache Handhabung erreicht werden soll.

Diese Aufgabe wird durch die Merkmale des Anspruchs 1 gelöst. Dadurch, daß das Gelenk an einem Gelenkkörper angeordnet ist, der mit einem das Gelenk tragenden Abschnitt des Klapparmes in einer innerhalb des Gerätekörpers angeordneten Führung versenkbar ist und daß die Führung an die Außenabmessungen des das Gelenk tragenden Abschnittes des Klapparmes angepaßt ist, so daß es für das Gelenk die Verriegelung bildet und den Klapparm führt, wurde eine überraschend einfache Lösung gefunden, die das Äußere des Arbeitsprojektors in keiner Weise beeinträchtigt und sich darüber hinaus durch eine sehr einfache Handhabung auszeichnet. In der Projektionsstellung des Klapparmes ist das Gelenk völlig in den Gerätekörper versenkt. Die im Gerätekörper angeordnete Führung des Klapparmes bildet gleichzeitig die Verriegelung für das Gelenk des Klapparmes.

Gemäß einer bevorzugten Ausführungsform der Erfindung ist die Führung als Profilkörper ausgebildet und nach oben geöffnet im Gerätekörper angeordnet. Eine derartige Lösung zeichnet sich durch eine besonders einfache Gestaltung aus und ist leicht in den Gerätekörper zu integrieren. Weiterhin ist es vorgesehen, daß der Gelenkkörper, an dem das Gelenk angeordnet ist, in der Führung verschiebbar geführt ist. Der Gelenkkörper kann dabei durchaus auch mit Spiel in der Führung angeordnet sein. Die sichere Arretierung des Klapparmes in seiner Projektionsstellung wird durch ein Spiel am Gelenkkörper in keiner Weise beeinträchtigt.

Gemäß einer bevorzugten Ausführungsform der Erfindung ist es weiterhin vorgesehen, daß an der Führung ein Anschlag für deren Endlagen vorgesehen ist. Als Anschlag ist beispielsweise ein am Gehäusekörper befestigter Zapfen vorgesehen, der in einen am Gelenkkörper vorgesehenen Schlitz mit Anschlagflächen eingreift.

Vorzugsweise ist die Länge des Klapparmes derart gestaltet, daß sich der Projektionskopf bei eingeklapptem Klapparm vor die der Führung entgegengesetzten Stirnseite des Gerätekörpers legt. Der Projektionskopf befindet sich dann in seiner Ruhestellung in einer geschützten Position seitlich des Gerätekörpers.

In der Zeichnung ist ein Ausführungsbeispiel der Erfindung dargestellt. Es zeigen:
- Fig. 1: einen Arbeitsprojektor in der Seitenansicht;
- Fig. 2: einen Schnitt durch den Gerätekörper im Bereich der Führung des in seiner Projektionsstellung befindlichen Klapparmes in vergrößerter Darstellung;
- Fig. 3: einen Schnitt gemäß Fig. 2, wobei der Klapparm in seine Ruhestellung geschwenkt ist.

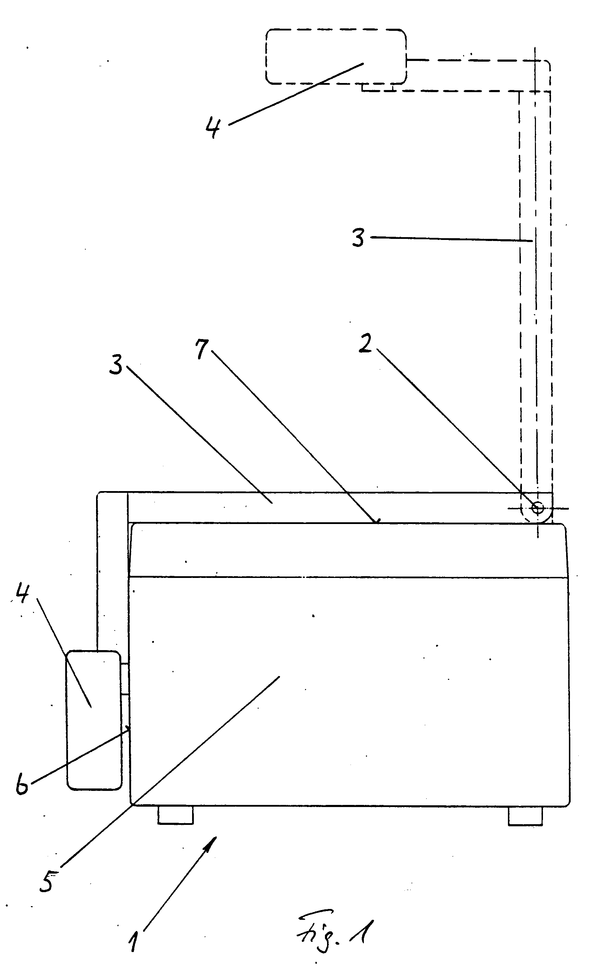

In der Fig. 1 der Zeichnung ist mit 1 ein Arbeitsprojektor bezeichnet, an dem an einem Gelenk 2 ein Klapparm 3 mit einem Projektionskopf 4 angeordnet ist. Der Klapparm 3 befindet sich in der in Fig. 1 ausgezogen dargestellten Position in seiner Ruhestellung, in der er an einen Gerätekörper 5 des Arbeitsprojektors 1 geschwenkt ist. Der Projektionskopf 4 liegt dann vor einer Stirnseite 6 des Gerätekörpers 5.

In der Fig. 1 ist gestrichelt die Projektionsstellung des Klapparmes 3 dargestellt. In dieser Stellung des Klapparmes 3 befindet sich der Projektionskopf 4, der ein in der Zeichnung nicht dargestelltes Objektiv und einen gleichfalls nicht dargestellten Umlenkspiegel aufweist oberhalb einer Arbeitsfläche 7 des Arbeitsprojektors 1. Auf der Arbeitsfläche 7 befindliche Transparentvorlagen werden mittels einer im Gerätekörper 5 angeordneten, in der Zeichnung nicht dargestellten Beleuchtungseinrichtung durchleuchtet, wobei das Licht in das Objektiv des Projektionskopfes 4 projiziert wird. Der am Projektionskopf 4 angeordnete Umlenkspiegel ermöglicht eine Projektion auf eine etwa senkrecht angeordnete Fläche.

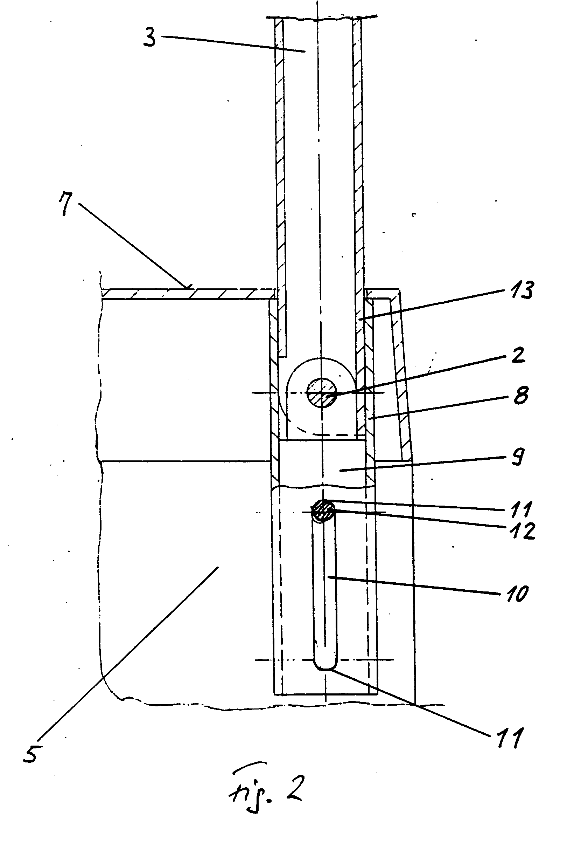

Aus der Fig. 2 ist ersichtlich, daß im Gerätekörper 5 eine nach oben geöffnete Führung 8 angeordnet ist. Die Führung 8 ist im Gerätekörper 5 befestigt. In der Führung 8 ist ein das Gelenk 2 tragender Gelenkkörper 9 verschiebbar angeordnet. Der Gelenkkörper 9 weist einen Schlitz 10 auf, der mit Anschlagflächen 11 für einen an der Führung 8 befestigten Zapfen 12 versehen ist. Der Zapfen 12 begrenzt den Weg, um den der Gelenkkörper 9 in der Führung 8 verschiebbar ist.

Am Gelenk 2 des Gelenkkörpers 9 ist der Klapparm 3 mit seinem das Gelenk 2 tragenden Abschnitt 13 angelenkt. Dieser das Gelenk 2 tragende Abschnitt 13 des Klapparmes 3 ruht in der Fig. 2 dargestellten Stellung des Klapparmes 3 der Führung 8. Die Führung 8 ist exakt an die Außenabmessungen des das Gelenk 2 tragenden Abschnittes 13 des Klapparmes 3 angepaßt, so daß der Klapparm 3 in seiner Projektionsstellung einwandfrei geführt und gehalten ist. Der das Gelenk 2 tragende Abschnitt 13 des Klapparmes 3 ruht spielfrei in der Führung 8, die gleichzeitig eine Verriegelung für das Gelenk 2 bildet.

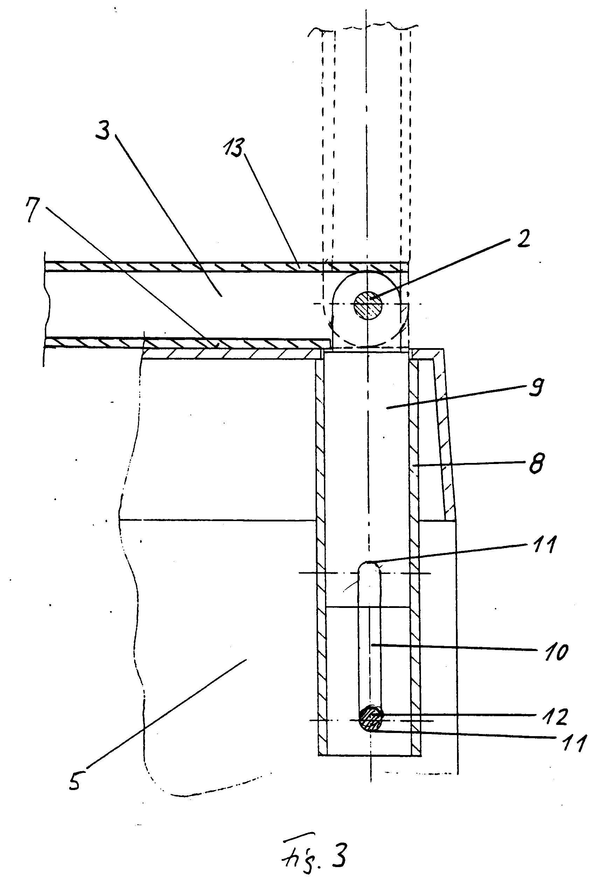

Sofern der Klapparm 3 in seine Ruhestellung geschwenkt werden soll, ist es lediglich erforderlich, den Klapparm 3 nach oben zu ziehen. Dieses erfolgt auf sehr einfache Art und Weise vorzugsweise mit einer Hand. Wie aus der Fig. 3 ersichtlich, tritt dann das am Gelenkkörper 9 angeordnete Gelenk 2 aus der Führung 8 heraus und wird freigegeben. Der Klapparm 3 kann dann zur Seite geschwenkt werden. Der in der Führung angeordnete Zapfen 12 begrenzt die Bewegung des Gelenkkörpers 9 nach oben, indem sich dessen untere Anschlagfläche 11 des Schlitzes 10 auf den Zapfen 12 legt. Es ist dabei unerheblich, wenn der Gelenkkörper 9 mit Spiel in der Führung 8 angeordnet ist. Der Gelenkkörper 9 wird in der Führung 8 lediglich geführt, das Abstützen des in der Projektionsstellung befindlichen Klapparmes 3 erfolgt an dessen Abschnitt 13. Nur dieser Abschnitt 13 muß in seinen Abmessungen exakt an die Führung 8 angepaßt sein.

Sofern der Klapparm 3 in seine Projektionsstellung gebracht werden soll, ist es lediglich erforderlich, diesen nach oben zu schwenken. Aufgrund seines Eigengewichtes tritt dann der das Gelenk 2 tragende Abschnitt 13 des Klapparmes 3 in die Führung 8 ein, so daß das Gelenk 2 verriegelt und der Klapparm 3 an seinem Abschnitt 13 abgestützt wird. Auch hier ist zur Betätigung lediglich eine Hand erforderlich. Die Bewegung des Gelenkkörpers 9 wird dadurch begrenzt, daß sich die obere Anschlagfläche 11 seines Schlitzes 10 auf den in der Führung 8 befestigten Zapfen 12 legt.

Wie aus der Zeichnung ersichtlich, ist bei in der Projektionsstellung befindlichem Klapparm nicht erkennbar, daß diese an einem Gelenk 2 befestigt ist. Hierdurch wird eine elegante Gestaltung des Äußeren des Arbeitsprojektors 1 erreicht. Insbesondere bei einem Einsatz des Projektors in Schulen wird weiterhin erreicht, daß die bei herkömmlichen Arbeitsprojektoren zu beobachtende Versuchung entfällt, mit dem erkennbar klappbaren baren Klapparm zu spielen. Es ist dem erfindungsgemäßen Arbeitsprojektor 1 in seiner Arbeitsstellung (Projektionsstellung des Klapparmes) nicht anzusehen, daß er mit einem Klapparm versehen ist. Der erfindungsgemäße Arbeitsprojektor 1 ist somit vor versehentlicher, aber auch mutwilliger Beschädigung besser geschützt als herkömmliche Geräte.

## Patentansprüche

1. Arbeitsprojektor mit einem Projektionskopf und einem Klapparm (3) für den Projektionskopf (4), der ein mit einer Verriegelung versehenes Gelenk (2) aufweist und um dieses an den Geratekörper (5) schwenkbar ist, wobei das Gelenk (2) an einem Gelenkkörper (9) angeordnet ist, **dadurch gekennzeichnet**, der Gelenkkörper (9) mit einem das Gelenk (2) tragenden Abschnitt (13) des Klapparmes (3) in einer innerhalb des Gerätekörpers (5) angeordneten Führung (8) versenkbar ist, wobei das Gelenk (2) in der Arbeitsstellung des Klapparmes (3) vollständig in die Führung (8) eintritt und daß die Führung (8) an die Außenabmessungen des das Gelenk (2) tragenden Abschnittes (13) des Klapparmes (3) angepaßt ist und so für das Gelenk (2) die Verriegelung bildet und den Klapparm (3) führt, wobei an der Führung (8) ein Anschlag, bestehend aus Zapfen (12), and Anschlagflächen (11) für die Endlagen des Gelenkkörpers (9) vorgesehen ist.

2. Arbeitsprojektor nach Anspruch 1, dadurch gekennzeichnet, daß die Führung (8) als Profilkörper ausgebildet und nach oben geöffnet im Gerätekörper (5) angeordnet ist.

3. Arbeitsprojektor nach Anspruch 1 und ggf. Anspruch 2, dadurch gekennzeichnet, daß der Gelenkkörper (9) in der Führung (8) verschiebbar geführt ist.

4. Arbeitsprojektor nach Anspruch 1 und einem oder mehreren der weiteren Ansprüche, dadurch gekennzeichnet, daß als Anschlag ein am Gehäusekörper (5) befestigter Zapfen (12) vorgesehen ist, der in einen Schlitz (10) mit Anschlagflächen (11) des Gelenkkörpers (9) eingreift.

5. Arbeitsprojektor nach Anspruch 1 und einem oder mehreren der weiteren Ansprüche, dadurch gekennzeichnet, daß die Länge des Klapparmes (3) derart gestaltet ist, daß sich der Projektionskopf (4) bei eingeklappten Klapparm (3) vor die der Führung (8) entgegengesetzten Stirnseite (6) des Gerätekörpers (5) legt.

## Claims

1. An overhead projector with a projection head and a collapsible or folding arm (3) for the projection head (4), the arm having an articulated joint or pivot (2) provided with a locking mechanism and being pivotable with respect to the projector body (5), and the articulated joint or pivot (2) being arranged on a pivot mounting or body (9), characterised in that the pivot mounting or body (9), with a portion (13) of the collapsible arm (3) bearing the articulated joint or pivot (2), is retractable or receivable into a guide (8) arranged within the projector body (5) so that the articulated joint or pivot (2) fully enters the guide (8) in the working position of the collapsible arm (3), and that the guide (8) is matched to the external dimensions of the portion (13) of the collapsible arm (3) carrying the articulated joint or pivot (2) and thus forms the locking mechanism for the articulated joint or pivot (2) and guides the collapsible arm (3), the guide (8) being provided with a limit stop comprising a peg (12) and a stop surface (11) for the end position of the pivot mounting or body (9).

2. An overhead projector according to claim 1, characterised in that the guide (8) is in the form of a profiled body and is arranged in the projector body (5) so that it is upwardly open.

3. An overhead projector according to claim 1 and, if desired, claim 2, characterised in that the pivot mounting or body (9) is slidingly or movably guided in the guide (8).

4. An overhead projector according to claim 1 and one or both of claims 2 and 3, characterised in that provision is made for a peg (12) to be secured to the projector body (5) as a limit stop, the said peg (12) engaging with stop surfaces (11) of the articulated body (9) in a slit (10).

5. An overhead projector according to claim 1 and one or more of the other claims, characterised in that the length of the collapsible arm (3) is such that, with the collapsible arm (3) in its collapsed or folded position, the projection head (4) lies in front of the front face of the projector body remote from the guide (8).

## Revendications

1. Rétroprojecteur comportant une tête de projection et un bras rabattable (3) pour la tête de projection (4), muni d'une articulation (2) équipée d'un verrouillage, et qui peut pivoter autour de cette articulation par rapport au corps (5) de l'appareil, l'articulation (2) étant montée sur un corps d'articulation (9), caractérisé en ce que le corps d'articulation (9) est susceptible d'être enfoncé avec un segment (13) du bras rabattable (3) portant l'articulation (2) dans un moyen de guidage (8) prévu dans le corps (5) de l'appareil, l'articulation (2) pénétrant complètement dans le moyen de guidage (8) lorsque le bras rabattable (3) est en position de travail et en ce que le moyen de guidage (8) est adapté aux dimensions extérieures du segment (13) du bras rabattable (3) qui porte l'articulation (2) et forme ainsi le moyen de verrouillage de l'articulation (2) et guide le bras rabattable (3), le moyen de guidage (8) comportant une butée formée d'un téton (12) et de surfaces de butée (11) pour les positions de fin de course du corps d'articulation (9).

2. Rétroprojecteur selon la revendication 1, caractérisé en ce que le moyen de guidage (8) est en forme de corps profilé ouvert vers le haut dans le corps (5) de l'appareil.

3. Rétroprojecteur selon la revendication 1 ou la revendication 2, caractérisé en ce que le corps d'articulation (9) est guidé de manière coulissante dans le moyen de guidage (8).

4. Rétroprojecteur selon la revendication 1 et une ou plusieurs des revendications suivantes, caractérisé en ce que la butée est un téton (12) fixé au corps (5) de l'appareil, et qui vient prendre dans une fente (10) ayant des surfaces de butée (11) du corps d'articulation (9).

5. Rétroprojecteur selon la revendication 1 ou l'une ou plusieurs des revendications suivantes, caractérisé en ce que la longueur du bras rabattable (3) est telle que la tête de projection (4), lorsque le bras rabattable (3) est rabattu, se place devant la face frontale (6) du corps de l'appareil (5), à l'opposé du moyen de guidage (8).
